# EUROPEAN PATENT SPECIFICATION

(11) **EP 0 649 485 B1**
(45) Date of publication and mention of the grant of the patent: **03.09.1997**
(21) Application number: 93915007.4
(22) Date of filing: 28.06.1993
(51) Int. Cl.: E02B 17/04, E02D 27/34

(54) **METHOD FOR MOUNTING OF HEAVY STRUCTURAL PARTS**
VERFAHREN ZUM AUFBAUEN VON SCHWEREN KONSTRUKTIONSTEILEN
PROCEDE DE MONTAGE D'ELEMENTS LOURDS DE CONSTRUCTION

(30) Priority: 29.06.1992 NO 922561
(43) Date of publication of application: 26.04.1995
(73) Proprietor: KVAERNER A.S., 0212 Oslo (NO)
(72) Inventor: FURU, Harald, N-1362 Billingstad (NO)
(74) Representative: Görg, Klaus, Dipl.-Ing.
(86) International application number: NO9300100
(87) International publication number: WO9400643

(56) References cited:
- GB-A- 1 364 298
- NO-B- 137 360
- NO-B- 140 537
- NO-B- 168 492
- US-A- 5 081 806

## Description

The invention concerns a method for mounting of heavy structural parts on a load-bearing support structure, where force-absorbing elements are provided between the structural part and the support.

When erecting large structures it has become increasingly expedient to construct the structures in separate parts which are later assembled to form the total structure. Particularly in connection with offshore structures, e.g. platform structures, the base and the actual platform part have each been constructed separately and put together after the base has been placed in the water. Accommodation units and the like have also been built in segments which are subsequently assembled. The assembly of such large, heavy structures is difficult to perform. There are a number of critical factors which must be taken into account during this operation in order to prevent faults from arising in one of the structural parts. A flexible assembly should preferably be performed and during the assembly it should be possible to make allowance for the fact that those surfaces which are intended to abut on each other may not be identical, so that it must be possible to compensate for irregularities. If the assembly is out of alignment or if irregularities occur between the elements, dangerous stress could arise in the completed structure, possibly leading to critical situations, e.g. in an offshore structure in bad weather. In order to achieve a correct balance it is also important to ensure that loads are distributed evenly over the support.

Another feature which should also be considered during the assembly of large or heavy structural parts is that during the assembly operations there can easily arise lateral moments which can result in an incorrect assembly and hence subsequent problems with the actual structure, wiring, etc.

Until now the principal means of solving the above-mentioned problems has been the use of plastically deformable distance pieces. An example of the state of the prior art can be found in Norwegian patents no. 140 537 and no. 168 492.

In the former Norwegian patent the use is proposed of plastically deformable metal pipes as mounting elements between the upper and the lower structural parts.

In NO patent 168 492 the use is proposed of mounting elements which are plastically deformable and which are designed in the form of laminated blocks, at least one of which consists of lead or of a metal with corresponding plastic properties.

These known plastically deformable mounting elements can only distribute forces and compensate for irregularities. Faults can still arise if major errors occur during the assembly operation or if the compression capabilities of the elements are exceeded. With the methods used to date, in practice a completely rigid structure will be obtained after the assembly of the structural parts and after they are joined together the elements will be welded to one another.

A further problem in connection with the erection of large structures which have to be assembled is the mounting of the structural parts during the actual construction. During the actual construction period and the installation of modules, unexpected horizontal forces can arise from, e.g., wind, temperature changes, and earthquakes may also occur during the building of, e.g., a deck construction. Such events can lead to deformations and the formation of scratches on the underside of the structural part, which is not at all easy to inspect during the construction period.

The aim of the invention is to improve the conditions existing during the assembly of large structural parts. Thus it is an object of the invention to provide a method for mounting of heavy structural parts on a load-bearing support structure, whether it be an assembly of two or more elements in a complete structure or mounting on a support of structural parts during construction or transport. It should also be stated that structures have been designed which are intended to absorb both horizontal and vertical forces. However, these structures have become very expensive.

A further object of the invention is to provide a method whereby a mounting can be obtained which will counteract or prevent the formation of faults in the structural part and which will be capable of protecting the structural parts against the effect of lateral moments or horizontal forces, thus enabling the best possible conditions to be achieved both during the construction period and for the completed structure.

These objects are achieved with a method which is characterized by the features in the claims presented.

In the invention a different solution has been chosen from that which has been used previously, with a plastically deformable mounting. The invention has been based on the recognition of the fact that it will be more practical to obtain an elastic joining by means of spring elements. A number of advantages will thereby be achieved. It will be possible to cushion the structure during assembly and in the case of structures which are lying at the construction site, suddenly occurring, unforseen forces such as an earthquake or a sudden storm will be able to be absorbed by the mounting instead of directly affecting the structure. With an elastic mounting it will also be possible to maintain the even distribution of forces between the structural parts and during an assembly operation it will be possible to absorb temporary lateral forces and place the structural parts in the correct position. Thus by means of the invention it will be possible to achieve a better final structure and, even though a final welding is performed, the possibility will be provided of performing a final adjustment of the relative positions of the structural parts before the welding is performed.

By providing the mounting elements in a pattern according to the invention, there will be a definite centering of the spring forces, thus enabling the structural parts to be exposed to vertical forces in relation to one another. An active system of this kind is in sharp contrast to the previously known passive mountings. The placing of the elements in a pattern of this kind and the necessity for this will be dependent on the design of the spring elements, since these can be designed with varying horizontal stiffness.

The invention will now be illustrated in more detail by means of the drawing, which illustrates some design alternatives for the method according to the invention.
- Fig. 1: shows two structural parts and indicates purely schematically where the mounting elements should be placed according to the invention.
- Figs. 2 & 3: are two examples of how elastic mounting elements can be placed.
- Fig. 4: is a purely schematic illustration of a mounting element which can be used in the method according to the invention.

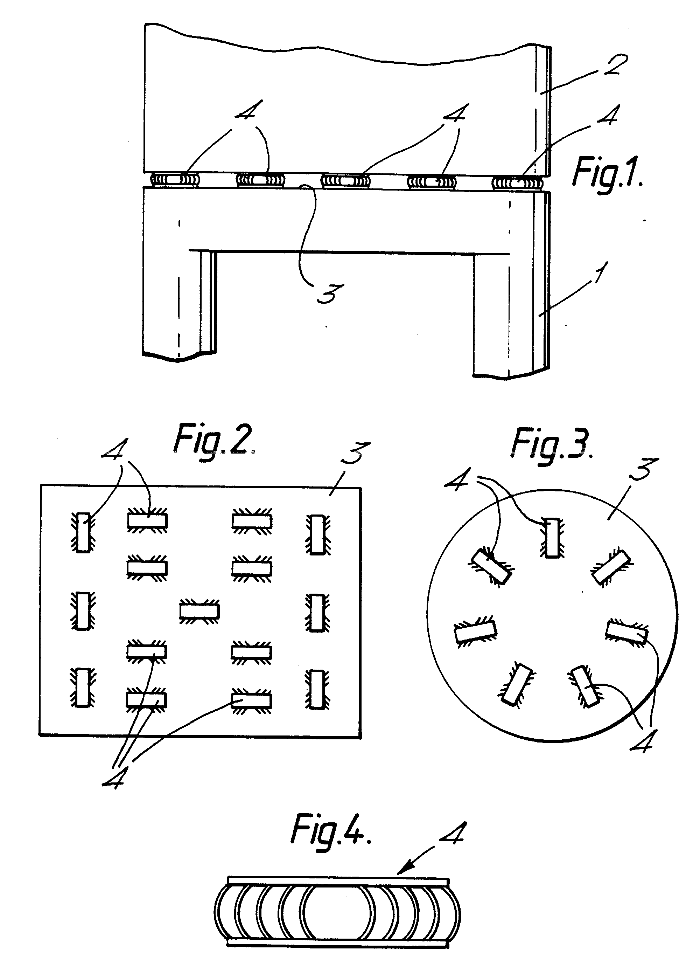

The drawing only illustrates how the method according to the invention can be implemented. Since a significant difference from the prior art is that in the method an elastic and cushioning mounting is provided instead of a plastically deformable mounting, the illustration of the method will only provide a very general impression of its design. Thus fig. 1 shows a lower structural part 1 and an upper structural part 2, where the lower structural part 1 supports the upper part. The lower part 1 can be the leg structure of an offshore platform and in this case instead of having a full upper bearing surface as illustrated, will normally consist of several circular shafts in the form of a circle as illustrated in fig. 3. The lower part 1 can also be a supporting structure which is used in the construction, e.g. of an offshore platform deck 2 and in this case can have a larger flat surface, e.g. of the type illustrated in fig. 2. In both cases the surface area is indicated by 3. According to the invention, on this surface area 3 there are provided elastic spring elements which are generally indicated by 4. An advantageous embodiment of such spring elements is described, e.g., in NO patent 159 550. Such elements have the major advantage that they can be designed in such a manner that they compensate for lateral forces, i.e. the spring elements cannot "collapse", thus allowing lateral forces to be "counteracted" directly by the spring elements. The elements can be designed with a number of spring coils and dimensioned so that they are capable of resisting very great loads without being completely compressed. The number of such elements will also be dependent on the surface load and a calculation of the number of spring elements, the spring force of the spring elements and their position will be a simple task for a person skilled in the art. In figs. 2 and 3 there are illustrated different patterns for the positioning of such spring elements. Of course, these drawings are only meant to indicate positioning possibilities and the number of elements can, of course, often be much greater than that which is illustrated and may amount to several hundred. The essential point which figs. 2 and 3 attempt to illustrate is that the spring elements, which are designed in such a manner that they counteract horizontal forces in their longitudinal direction, are placed at different angles, thus making the entire mounting of the structural part 2 insensitive to lateral forces or horizontal forces. If the structural part 2 is placed on the elements 4 and for some reason receives a moment in the lateral direction, the spring elements will immediately force the structural part 2 back into the correct position. Should vibrations occur these will be absorbed by the spring elements and should it be necessary to balance the parts in relation to one another it will be possible to do this by exercising a force on one of the sides of the structural part 2, thus enabling the spring elements on that side to be compressed a little more before the parts are welded together.

Fig. 4 illustrates the design of a spring element as described in NO patent no. 159 550.

It should be obvious from the above that there are many ways ir which the invention can be implemented, nor is the invention confined to the use of spring elements of the type illustrated. Within the scope of the invention it will also be possible to use other variations of spring elements and it will also be possible to arrange the elements in other patterns than that which is illustrated. Thus many variations will be possible within the scope of the concept of the invention.

## Claims

1. Method for temporary mounting of heavy structural parts on a load-bearing support structure, in the correct position for subsequent permanent assembly, where force-absorbing elements are positioned between the structural part and the support, the number of such elements being determined by the absorbing force of the elements and the weight of the structural part, characterized in that as force-absorbing elements are used elastic spring elements (4) being positioned in such a way that the elastic spring effect is directed substantially in the vertical direction, and such that the resistance of the spring elements (4) to the influence of force is preferably greater in the horizontal direction than in the vertical direction, said elements (4) are provided with spring arcs which are preferably provided between two plates which are placed with the plates facing the respective structures and where spring arcs are provided in groups, where the arc in each group is placed at an equal angle, but where each spring element contains several groups at opposite angles.

2. Method according to claim 1,
characterized in that the used spring elements (4) are provided in a pattern which will cause resistance from the spring elements (4) to lateral forces in all directions.

3. Method according to claim 1,
characterized in that the spring arc is provided at an angle to the plates' longitudinal direction.

4. Method according to claim 1,
characterized in that the used spring elements (4) are provided in such a way that all spring arcs are defined with the same angle, said elements being distributed over the joining surface for the structural parts in such a manner that distorting joining forces are counteracted.

## Patentansprüche

1. Verfahren zum zeitweiligen Anbringen von schweren Konstruktionsteilen an einer tragenden Stützkonstruktion in der richtigen Stellung für den nachfolgenden dauerhaften Zusammenbau, bei dem kraftabsorbierende Elemente zwischen dem Konstruktionsteil und der Stütze angeordnet sind, wobei die Anzahl derartiger Elemente durch die Absorptionskraft der Elemente und das Gewicht des Konstruktionsteils bestimmt wird,
dadurch **gekennzeichnet,** daß
als kraftabsorbierende Elemente elastische Federelemente (4) verwendet werden, die derart angeordnet sind, daß die elastische Federwirkung im wesentlichen in die vertikale Richtung gerichtet ist, und derart, daß der Widerstand der Federelemente (4) auf einen Krafteinfluß vorzugsweise in der horizontalen Richtung größer ist als in der vertikalen Richtung, wobei die Elemente (4) mit Federbögen versehen sind, die vorzugsweise zwischen zwei Platten vorgesehen sind, die derart angeordnet sind, daß die Platten zu den jeweiligen Konstruktionen gerichtet sind, wobei die Federbögen in Gruppen vorgesehen sind, und wobei der Bogen in jeder Gruppe mit einem gleichen Winkel angeordnet ist, aber jedes Federelement mehrere Gruppen mit entgegengesetzten Winkeln enthält.

2. Verfahren nach Anspruch 1,
dadurch **gekennzeichnet,** daß
die verwendeten Federelemente (4) in einem Muster vorgesehen sind, das einen Widerstand der Federelemente (4) gegen seitliche Kräfte in sämtlichen Richtungen bewirkt.

3. Verfahren nach Anspruch 1,
dadurch **gekennzeichnet,** daß
der Federbogen mit einem Winkel zu der Längsrichtung der Platten vorgesehen ist.

4. Verfahren nach Anspruch 1,
dadurch **gekennzeichnet,** daß
die verwendeten Federelemente (4) derart vorgesehen sind, daß sämtliche Federbögen mit dem gleichen Winkel festgelegt sind, wobei die Elemente über die Verbindungsfläche für die Konstruktionsteile derart verteilt sind, daß verformenden Verbindungskräften entgegengewirkt wird.

## Revendications

1. Procédé pour le montage temporaire de pièces structurelles lourdes sur une structure de support résistant à la charge, dans la position correcte pour le montage permanent ultérieur, dans lequel des éléments d'absorption de la force sont positionnés entre la pièce structurelle et le support, le nombre de ces éléments étant déterminé par la force d'absorption des éléments et le poids de la pièce structurelle, caractérisé en ce que, comme éléments d'absorption de la force, on utilise des éléments à ressorts élastiques (4) positionnés de telle sorte que l'effet élastique des ressorts soit dirigé essentiellement dans la direction verticale, et de telle sorte que la résistance des éléments à ressorts (4) à l'influence de la force soit de préférence plus grande dans la direction horizontale que dans la direction verticale, lesdits éléments (4) sont dotés de ressorts arqués qui sont de préférence prévus entre deux plaques qui sont placées de telle sorte que les plaques soient tournées vers les structures respectives, et dans lequel les ressorts arqués sont prévus par groupes, l'arc de chaque groupe étant placé à un angle égal, mais chaque élément à ressorts contenant plusieurs groupes à des angles opposés.

2. Procédé selon la revendication 1, caractérisé en ce que les éléments à ressorts (4) utilisés sont disposés suivant un motif qui provoquera une résistance des éléments à ressorts (4) à des forces latérales dans toutes les directions.

3. Procédé selon la revendication 1, caractérisé en ce que le ressort arqué est disposé suivant un angle par rapport à la direction longitudinale des plaques.

4. Procédé selon la revendication 1, caractérisé en ce que les éléments à ressorts (4) utilisés sont disposés de telle sorte que tous les ressorts arqués soient définis avec le même angle, lesdits éléments (4) étant répartis sur la surface de jonction avec les pièces structurelles de telle sorte que des forces de jonction exerçant une déformation soient contrées.
